(19) Europäisches Patentamt / European Patent Office / Office européen des brevets

(11) **EP 3 301 655 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(51) Internationale Patentklassifikation (IPC):
**G07D 7/12** (2016.01)     **G01N 21/64** (2006.01)
**G07D 7/1205** (2016.01)

(21) Anmeldenummer: **16191814.9**

(52) Gemeinsame Patentklassifikation (CPC):
**G01N 21/6408; G07D 7/1205**

(22) Anmeldetag: **30.09.2016**

(54) **LUMINESZIERENDES SICHERHEITSMERKMAL**

LUMINESCENT SECURITY FEATURE

ÉLÉMENT DE SÉCURITÉ LUMINESCENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.04.2018 Patentblatt 2018/14**

(73) Patentinhaber: **CSEM Centre Suisse d'Electronique et de Microtechnique SA - Recherche et Développement**
**2002 Neuchâtel (CH)**

(72) Erfinder:
• **Reinhardt, Jonas**
  **7206 Igis (CH)**
• **Hofer, Christoph**
  **8303 Bassersdorf (CH)**
• **Cattaneo, Stefano**
  **7302 Landquart (CH)**

(74) Vertreter: **Detken, Andreas**
**Isler & Pedrazzini AG**
**Giesshübelstrasse 45**
**Postfach 1772**
**8027 Zürich (CH)**

(56) Entgegenhaltungen:
WO-A1-01/27883     WO-A1-2013/179249
WO-A1-2015/159438     DE-A1- 19 808 652
US-A- 5 485 530     US-A- 5 608 225
US-A1- 2005 178 841     US-A1- 2007 018 116
US-A1- 2007 145 293     US-A1- 2008 116 272
US-A1- 2015 260 653

## Beschreibung

TECHNISCHES GEBIET

Die vorliegende Erfindung betrifft ein lumineszierendes Sicherheitsmerkmal.

STAND DER TECHNIK

In den verschiedensten wirtschaftlichen und technischen Bereichen nimmt das Problem der Fälschung von Originalprodukten ständig zu. Neue Technologien erlauben das massenhafte Kopieren der Originale in einer Qualität, dass Kopien mit blossem Auge kaum oder gar nicht von Originalen zu unterscheiden sind. Betroffen sind nicht nur Luxusartikel, sondern auch Bauteile technischer Einrichtungen, z.B. im Bereich des Automobilbaus, der Medizintechnik oder der Elektronikindustrie, mit zum Teil auch sicherheitsrelevanten Eigenschaften.

Um sich gegen diese Art der Produktpiraterie zu schützen, versehen viele Hersteller ihre Produkte mit Sicherheitsmerkmalen (auch als Identifikationsmerkmale oder ID-Merkmale bezeichnet). Sicherheitsmerkmale dienen dazu, die Echtheit eines Produkts zu überprüfen oder seinen Weg vom Herstellungsort zum Endkunden zu verfolgen. Solche Sicherheitsmerkmale können z.B. auf der Basis einer Farbe, einer Fluoreszenz oder sonstigen physischen Eigenschaften erzeugt werden. Aus dem Stand der Technik ist eine Vielzahl von Arten von Sicherheitsmerkmalen bekannt, vom einfachen Aufkleber über Hologramme, die auf einem Aufkleber oder am Produkt selbst ausgebildet sind, bis hin zu speziellen Inhaltsstoffen, die im Material des Produkts eingebettet sind.

Komplexe Sicherheitsmerkmale können es einem Hersteller erlauben, das Produktionslos oder gar ein einzelnes bzw. individuelles Produkt zu identifizieren. Sie können auch Metadaten wie Produktionsdatum und Produktionsort, Haltbarkeitsdaten und ähnliche Daten in kodierter Form enthalten. Insofern besteht ein Bedarf nach immer komplexeren Sicherheitsmerkmalen.

Für den Komplexitätsgrad eines Sicherheitsmerkmales hat sich eine einfache Terminologie eingebürgert. Man spricht von Stufe-1-Merkmalen (Erststufenmerkmal, first level security feature), sofern eine Analyse der Merkmals zum Zwecke der Authentifizierung bzw. Identifizierung mit Hilfe der natürlichen Sinne möglich ist, also kein Hilfsgerät erforderlich ist. Beispielsweise stellt ein Sicherheitsfaden ein Erststufenmerkmal dar. Ein Zweitstufenmerkmal (Stufe-2-Merkmal, second level security feature) verlangt für die Analyse ein einfaches Hilfsgerät wie etwa eine Lupe oder eine UV-Lampe. Ein Drittstufenmerkmal (Stufe-3-Merkmal, third level security feature) erfordert für seine Analyse eine forensische Untersuchung mit umfangreichem Equipment und/oder professionellem Bedienungspersonal.

Erststufenmerkmale sind zwar in der Regel als eine Art Vorprüfung für den Konsumenten gut geeignet, aber erlauben meist nicht eine Identifikation eines individuellen Produktes aus einer grösseren Serie. Zudem stellt ein Erststufenmerkmal eine offensichtliche Herausforderung für einen Fälscher dar, das Merkmal zu simulieren. Intelligente Zweitstufenmerkmale eröffnen hingegen die Möglichkeit eines guten Kompromisses im Hinblick auf eine Authentifizierung bis zur Serien- oder Einzelstückebene bei übersichtlichen Kosten und einer einfachen Handhabung.

Aus dem Stand der Technik sind insbesondere Sicherheitsmerkmale auf der Basis von Fluoreszenzfarbstoffen bekannt.

So offenbart US 5,608,225 ein Verfahren zur Detektion einer fluoreszierenden Markierung, bei dem die Markierung mit Anregungslicht beleuchtet wird, dessen Intensität sich periodisch ändert. Entsprechend ändert sich auch die Intensität des von der Markierung emittierten Fluoreszenzlichts periodisch, wobei die Phase der Fluoreszenzintensität gegenüber der Phase der Anregungsintensität verschoben ist. Um festzustellen, ob es sich bei einer Markierung um eine fluoreszierende Markierung handelt, wird vorgeschlagen, zu prüfen, ob die Markierung bei Beleuchtung mit intensitätsmoduliertem Anregungslicht derart phasenverschobenes Licht aussendet. Ausserdem wird vorgeschlagen, den Betrag der Phasenverschiebung zu messen, um die Art des fluoreszierenden Materials zu ermitteln, aus dem die Markierung besteht.

WO 95/09499 A1 offenbart ein Verfahren zur Authentifizierung von Gegenständen, bei dem ebenfalls eine fluoreszierende Markierung mit periodisch intensitätsmoduliertem Anregungslicht beleuchtet wird. Um das vom Gegenstand zurückgeworfene Fluoreszenzlicht zu charakterisieren, werden verschiedene Eigenschaften des Fluoreszenzlichts ermittelt, darunter unter anderem die Zeitverschiebung zwischen Anregungs- und Fluoreszenzlicht.

US 2015/0260653 A1 schlägt ein Sicherheitsmerkmal vor, das eine Mischung von lumineszierenden Materialien mit unterschiedlichen Lebensdauern umfasst. Durch eine Analyse der Zerfallsspektren nach einer Anregung kann auf die verwendeten Materialien zurückgeschlossen werden. Die Messung der Zerfallsspektren erfolgt in der Zeitdomäne, indem das Sicherheitsmerkmal durch Beleuchtung mit Anregungslicht angeregt wird, dann die Beleuchtung beendet wird und anschliessend der zeitliche Verlauf der Intensität des Fluoreszenzlichts aufgezeichnet wird.

Aus einem völlig anderen technischen Bereich, nämlich dem Bereich der Life Sciences, ist ein Verfahren bekannt, das als Fluoreszenzlebensdauermikroskopie (Fluorescence Lifetime Imaging Microscopy, kurz FLIM) bezeichnet wird. Die Fluoreszenzlebensdauermikroskopie ist ein bildgebendes Verfahren, das Fluoreszenzmarker verwendet, die in unterschiedlichen physicochemischen Umgebungen variierende Fluoreszenzlebensdauern aufweisen. Die Fluoreszenzmarker werden also quasi als lokale chemische Sonden eingesetzt. Zur Bildgebung wird eine ortsaufgelöste Messung der Fluoreszenzlebensdauer über die Oberfläche einer Probe vorgenommen. Hieraus können Rückschlüsse auf die räumliche Variation der physikochemischen Umgebung der eingesetzten Fluoreszenzmarker gezogen werden. Auf diese Weise ermöglicht FLIM die Ermittlung der räumlichen Verteilung von Grössen wie pH-Wert, Ionenkonzentration, Sauerstoffgehalt usw. in lebenden Zellen, Geweben und Modellorganismen. Des weiteren ermöglicht FLIM die räumliche Abbildung von Protein-Protein-Wechselwirkungen in Zellen, indem die räumliche Verteilung des Förster-Resonanzenergietransfers (FRET) ermittelt wird. Eine Übersicht über Technology und klassische Anwendungen bietet zum Beispiel die Monografie FLIM Microscopy in Biology and Medicine, Periasamy A., Clegg R. M., ISBN-10: 1420078909, ISBN-13: 978-1420078909, CRC Press, 2010.

US 2007/0018116 A1 offenbart eine Vorrichtung zur Abbildung einer lumineszierenden Probe, die sich insbesondere für die Fluoreszenzlebensdauermikroskopie eignet. Die Vorrichtung weist eine Lichtquelle auf, um die Probe mit Anregungslicht zu beleuchten. Ein Lichtmodulator moduliert die Intensität des Anregungslichts periodisch. Ein ortsauflösender Lock-in-Imager mit einer Vielzahl von Pixeln detektiert das Lumineszenzlicht, das von der Probe abgestrahlt wird, und ermittelt Pixel für Pixel ein Mass für die Phasenverschiebung zwischen der Modulation des Anregungslichts und des Lumineszenzlichts. Daraus kann dann die räumliche Verteilung der Fluoreszenzlebensdauer abgeleitet werden.

Aus der US 2007/145293 A1 ist ein Gerät zur Verifizierung eines Sicherheitsmerkmals bekannt, welches eine Anregungsquelle zur Beleuchtung des Sicherheitsmerkmals, eine mit der Antriebsquelle verbundene Steuerung zur Aktivierung und Deaktivierung der Anregungsquelle, sowie einen Detektor umfasst. In Übereinstimmung mit der von der Steuerung gelieferten Zeitinformationen misst der Detektor die vom Sicherheitsmerkmal ausgesandte Lumineszenz.

Die US 2005/0178841 A1 offenbart die Verwendung der Abklingzeit(en) eines Sicherheitsmerkmals zur Bestimmung einer Signatur (decay time signature). Außerdem können die lumineszierenden Elemente in einem Barcode angeordnet sein.

Die WO 2015/159438 A1 offenbart eine ortsaufgelöste Messung von Zerfallsraten. Dabei wird der Abfall der Intensität über einen bestimmten Zeitraum ermittelt. Das so erhaltene zweidimensionale Bild wird dann mit einem Referenzbild verglichen.

## DARSTELLUNG DER ERFINDUNG

In einem ersten Aspekt ist es eine Aufgabe der vorliegenden Erfindung, ein Sicherheitsmerkmal auf der Basis lumineszierender Farbstoffe anzugeben, das sich dazu eignet, als Zweitstufenmerkmal ausgebildet zu werden, wobei das Sicherheitsmerkmal insbesondere eine Codierung von Informationen erlaubt, die z.B. zur Identifikation auf Serien- oder Einzelstückebene dienen können, ohne dass diese codierten Informationen mit dem unbewaffneten Auge auslesbar sind.

Ein solches Sicherheitsmerkmal wird in Anspruch 1 angegeben. Weitere Ausführungsformen sind in den abhängigen Ansprüchen angegeben.

Es wird also ein Sicherheitsmerkmal angegeben, welches mehrere lumineszierende Flächenelemente aufweist, wobei für jedes dieser Flächenelemente eine Lumineszenzlebensdauer bestimmbar ist, und wobei die Lumineszenzlebensdauer zwischen den Flächenelementen variiert. In anderen Worten ist die Lumineszenzlebensdauer nicht in allen Flächenelementen identisch, sondern unterscheidet sich in mindestens einem Flächenelement von der Lumineszenzlebensdauer in einem benachbarten Flächenelement.

Bei der Lumineszenz wird ein physikalisches System durch Energieabsorption in einen angeregten Zustand versetzt und emittiert Licht. Das Phänomen der Lumineszenz schliesst in der üblichen Weise Fluoreszenz und Phosphoreszenz ein. Unter dem Begriff «Licht» wird elektromagnetische Strahlung im Infrarotbereich, sichtbaren Bereich und UV-Bereich verstanden, insbesondere im Wellenlängenbereich von 100 Nanometer bis 10 Mikrometer.

Der zeitliche Verlauf der Intensität $I(t)$ der Lumineszenz einer Probe mit einem einzigen Lumineszenzfarbstoff nach Beendigung einer Anregung lässt sich häufig in guter Näherung durch die Gleichung

$$I(t) = I_0 \exp(-t/\tau) \qquad \text{(Gleichung 1)}$$

beschreiben, wobei $I_0$ die Anfangsintensität und $\tau$ die Lumineszenzlebensdauer ist.

Insbesondere bei der Fluoreszenz ist die Fluoreszenzlebensdauer mit dem unbewaffneten Auge häufig nicht bestimmbar, da Fluoreszenzlebensdauern häufig im Bereich von Pikosekunden bis Mikrosekunden liegen und damit unterhalb der Zeitskala, die mit dem blossen Auge unterscheidbar ist. Allerdings lässt sich mit technischen Hilfsmitteln ein Bild der räumlichen Verteilung der Fluoreszenzlebensdauer anfertigen, wie dies nachstehend noch näher ausgeführt wird. Damit eignet sich das erfindungsgemässe Sicherheitsmerkmal hervorragend als Zweitstufenmerkmal.

Zwei Lumineszenzlebensdauern sind insbesondere dann als unterschiedlich anzusehen, wenn sie sich um mehr als 5% unterscheiden, vorzugweise um mehr als 10%. Mathematisch ausgedrückt, sind zwei Lumineszenzlebensdauern $\tau_1$ und $\tau_2$, wobei $\tau_2 > \tau_1$, jedenfalls dann als unterschiedlich anzusehen, wenn gilt: $(\tau_2 - \tau_1)/\tau_1 > 5\%$, vorzugsweise $> 10\%$. In der Praxis können die Unterschiede zwischen den Lumineszenzlebensdauern natürlich auch noch wesentlich grösser sein, z.B. mehr als 20%.

Die unterschiedlichen Lumineszenzlebensdauern der Flächenelemente werden zur Codierung von Informationen eingesetzt. Die Lumineszenzlebensdauer in jedem Flächenelement nimmt einen von zwei unterschiedlichen Werten an. Dies erlaubt eine binäre Codierung von Daten mittels der Lumineszenzlebensdauer, wobei der erste Wert der Lumineszenzlebensdauer einer logischen 1 und der zweite Wert einer logischen 0 entspricht. Selbstverständlich sind aber auch komplexere Codierungsschemata möglich.

Flächenelemente mit unterschiedlichen Lumineszenzlebensdauern können insbesondere dadurch erzeugt werden, dass auf unterschiedlichen Flächenelementen Lumineszenzfarbstoffe mit unterschiedlichen Lumineszenzlebensdauern aufgetragen werden. Flächenelemente mit unterschiedlichen Lumineszenzlebensdauern können insbesondere dadurch erzeugt werden, dass den Flächenelementen jeweils ein Gemisch aus zwei oder mehr Lumineszenzfarbstoffen aufgetragen wird, wobei das Mischungsverhältnis zwischen den Flächenelementen variiert. Der zeitliche Verlauf der Intensität $I(t)$ der Lumineszenz einer Probe mit einer Mischung von mehreren Lumineszenzfarbstoffen entspricht einer Überlagerung mehrerer exponentieller Zerfälle nach Gleichung (1). Falls sich die einzelnen Lumineszenzlebensdauern nicht zu stark unterscheiden, lässt sich ein solcher multiexponentieller Zerfall in guter Näherung durch einen einzigen exponentiellen Zerfall beschreiben, wobei die Zerfallszeit der so angenäherten monoexponentiellen Zerfallskurve einen Mittelwert der einzelnen Lumineszenzlebensdauern darstellt. Damit ergibt sich für ein Flächenelement mit einem Gemisch mehrerer Lumineszenzfarbstoffe ein einziger Wert der (mittleren) Lumineszenzlebensdauer. Dieser Wert lässt sich insbesondere mit dem nachstehend diskutierten Nachweisverfahren ohne Weiteres bestimmen.

Ein erfindungsgemässes Sicherheitsmerkmal kann aber auch mindestens zwei Flächenelemente enthalten, die einen Farbauftrag mit einem identischen Lumineszenzfarbstoff aufweisen, wobei sich aber die chemische Umgebung des Lumineszenzfarbstoffs zwischen den Flächenelementen derart unterscheidet, dass in den Flächenelementen unterschiedliche Lumineszenzlebensdauern resultieren. Dies kann z.B. dadurch erreicht werden, dass der selbe Lumineszenzfarbstoff in den unterschiedlichen Flächenelementen in unterschiedlichen Formulierungen aufgetragen wurde, wobei die Formulierungen sich z.B. durch ihren pH-Wert unterscheiden, oder indem die beiden Flächenelemente zwei unterschiedliche Funktionsschichten aufweisen, wobei derselbe Lumineszenzfarbstoff in derselben Formulierung auf die unterschiedlichen Funktionsschichten aufgetragen ist, und wobei die Funktionsschichten die Lumineszenzlebensdauer des Farbstoffs unterschiedlich beeinflussen. Ein Vorteil dieses Verfahrens ist es, dass die chemische Umgebung in der Regel die Anregungsfrequenz und die Emissionsfrequenz des Lumineszenzfarbstoffs, insbesondere dessen wahrnehmbaren Farbton, nur wenig beeinflusst. Zwei Flächenelemente mit unterschiedlichen Lumineszenzlebensdauern können daher für das unbewaffnete Auge ohne weiteres gleich erscheinen. Das macht ein derartiges Sicherheitsmerkmal besonders attraktiv als ein Zweitstufenmerkmal.

Im Folgenden soll der Ausdruck, dass ein bestimmter Parameter (wie die Lumineszenzlebensdauer) "zwischen den Flächenelementen variiert", stets so verstanden werden, dass der betreffende Parameter nicht in allen Flächenelementen identisch ist, sondern dass es mindestens zwei benachbarte Flächenelemente gibt, in denen der betreffende Parameter unterschiedliche Werte annimmt.

Die Flächenelemente können sich noch durch weitere Parameter der Lumineszenz unterscheiden. So kann für jedes Flächenelement z.B. zusätzlich eine Anregungsfrequenz (äquivalent: Absorptionswellenlänge) und eine Emissionsfrequenz (äquivalent: Lumineszenzwellenlänge, "Farbton" des Lumineszenzlichts) bestimmbar sein. Beispielsweise kann jedes Flächenelement genau einen Fluoreszenzfarbstoff tragen, der eine charakteristische Anregungsfrequenz und eine charakteristische Emissionsfrequenz aufweist. Es ist dann von Vorteil, wenn zusätzlich zwischen den Flächenelementen nicht nur die Lumineszenzlebensdauer, sondern auch die Anregungs- und/oder Emissionsfrequenz variiert. Das kann insbesondere dadurch erreicht werden, dass auf verschiedenen Flächenelementen unterschiedliche Fluoreszenzfarbstoffe aufgetragen werden. Damit wird eine zusätzliche Dimension geschaffen, mit der Daten codiert werden können. Eine erste Dimension ist durch die Lumineszenzlebensdauer gegeben, indem die Variation der Lumineszenzlebensdauer zwischen den Flächenelementen ausgewertet wird. Eine zweite Dimension ist durch die Anregungsfrequenz oder die Emissionsfrequenz gegeben, indem die Variation der betreffenden Frequenz zwischen den Flächenelementen ausgewertet wird. Dabei ist es bevorzugt, wenn die Variation der Anregungs- und/oder Emissionsfrequenz nicht vollständig mit der Variation der Lumineszenzlebensdauer korreliert, so dass die Anregungs- und/oder Emissionsfrequenz unabhängig von der Lumineszenzlebensdauer Daten codieren kann.

Zwei Anregungs- oder Emissionsfrequenzen werden insbesondere dann als unterschiedlich angesehen, wenn sie sich um mehr als 5%, bevorzugt um mehr als 10% oder sogar mehr als 20%, unterscheiden, wobei als Anregungs- bzw. Emissionsfrequenz die Lage des Maximums in der spektralen Verteilung des absorbierten bzw. emittierten Lichts angesehen wird. Im sichtbaren Wellenlängenbereich (ca. 400-750 nm) werden also zwei Anregungs- oder Emissionsfrequenzen dann als unterschiedlich angesehen, wenn sie sich die betreffenden Wellenlängen um mehr als 5% unterscheiden, d.h. je nach Wellenlänge um mehr als 20-38 nm. Derartige Unterschiede in der Lage der Absorptions- bzw. Emissionsmaxima lassen sich ohne weiteres spektroskopisch auflösen, obwohl die Breite des Anregungsspektrums und des Emissionsspektrums üblicher Lumineszenzfarbstoffe häufig wesentlich grösser als dieser Unterschied ist. Grössere Unterschiede können unter Umständen auch visuell als Farbunterschiede wahrgenommen werden.

Eine weitere Dimension kann dadurch erzeugt werden, dass sich auch die Farbintensität (insbesondere die Konzentration des Lumineszenzfarbstoffs im jeweiligen Flächenelement) zwischen den Flächenelementen unterscheidet. Auch dabei ist es bevorzugt, wenn die Variation der Farbintensität nicht vollständig mit der Variation der Lumineszenzlebensdauer korreliert, so dass die Farbintensität unabhängig von der Lumineszenzlebensdauer Daten codieren kann.

Weiterhin wird ein nicht erfindungsgemäßes Verifikationsverfahren offenbart, das sich insbesondere zur Verifikation eines Sicherheitsmerkmals der vorstehend genannten Art eignet. Das Verfahren umfasst:

Beleuchten des Sicherheitsmerkmals mit Anregungslicht, welches mit einer Modulationsfrequenz intensitätsmoduliert ist;

Detektieren von Lumineszenzlicht, welches vom Sicherheitsmerkmal emittiert wird, in einer Mehrzahl von Pixeln;

Ermitteln eines Masses für die Phasenverschiebung zwischen dem Anregungslicht und dem Lumineszenzlicht bei der Modulationsfrequenz in unterschiedlichen Pixeln; und

Verifizieren des Sicherheitsmerkmals unter Berücksichtigung des Masses für die Phasenverschiebung in unterschiedlichen Pixeln.

Um die räumliche Verteilung der Lumineszenzlebensdauer zu ermitteln, ist es möglich, technische Prinzipien, die in einem völlig anderen technischen Kontext entwickelt wurden, nämlich für die Fluoreszenzlebensdauermikroskopie (FLIM), auf die gänzlich andersartige Problemstellung der Verifikation von Sicherheitsmerkmalen zu übertragen.

Die Detektion des Lumineszenzlichts kann insbesondere mit einem Lock-in-Imager erfolgen. Ein Lock-in-Imager ist z.B. in der Druckschrift US 2007/0018116 A1 offenbart. Der Inhalt der genannten Druckschrift wird durch Verweis vollständig in die vorliegende Beschreibung aufgenommen. Es sind verschiedene Bauformen und Betriebsweisen für Lock-in-Imager bekannt. Der aus der US 2007/0018116 A1 bekannte Lock-in-Imager zeichnet sich insbesondere durch folgende Eigenschaften aus: Er weist einen Detektor auf, der eine Mehrzahl von Pixeln definiert, wobei die Pixel insbesondere in einem zweidimensionalen Array angeordnet sind, sowie eine Steuereinrichtung, um eine Phasenbeziehung zwischen der intensitätsmodulierten Lichtquelle und dem Detektor herzustellen. Mindestens ein Teil der Pixel des Imager-Chips, bevorzugt jedes Pixel, weist auf

ein lichtempfindliches Element, um einfallendes Licht in ein elektrisches Signal umzuwandeln;

mindestens ein Speicherelement, bevorzugt mindestens zwei Speicherelemente, insbesondere genau zwei oder vier Speicherelemente, um das elektrische Signal zu speichern;

eine Transfereinrichtung, um das elektrische Signal an ein ausgewähltes Speicherelement zu übertragen; sowie

eine Ausleseeinrichtung, um das elektrische Signal selektiv aus dem Speicherelementen oder den Speicherelementen des Pixels auszulesen.

Dabei wirkt die Transfereinrichtung derart mit der Steuereinrichtung zusammen, dass die Transfereinrichtung das elektrische Signal synchron und phasenrichtig zur Modulationsfrequenz an das Speicherelement oder die Speicherelemente überträgt.

Auf diese Weise lässt sich ein Mass für die Phasenverschiebung zwischen dem Anregungslicht und dem vom Detektor empfangenen Licht ermitteln.

Die Transfermittel können insbesondere mindestens zwei CCD-Gateelektroden umfassen, wobei jede der Gateelektroden einen Anschluss für ein elektrisches Potential oder ein anders Mittel zur Erzeugung eines lateralen elektrischen Driftfeldes auf eine Oberfläche des Detektors umfasst. Die Speicherelemente können Integrationsgates sein. Für weitere Details wird auf die Druckschrift US 2007/0018116 A1 verwiesen.

Vorzugsweise wird zum Zwecke der Verifikation des Sicherheitsmerkmals das Mass für die Phasenverschiebung in unterschiedlichen Pixeln in Echtzeit visualisiert. Es wird also quasi ein Videofilm erstellt, der die räumliche Verteilung der Phasenverschiebung in Abhängigkeit von der Zeit darstellt.

Zusätzlich können noch weitere Parameter bestimmt werden, die für die Lumineszenz kennzeichnend sind. So kann das Verfahren insbesondere umfassen:

Ermitteln eines Masses für mindestens einen der folgenden Parameter in unterschiedlichen Pixeln: Anregungsfrequenz, Emissionsfrequenz und Lumineszenzintensität, und

Verifizieren des Sicherheitsmerkmals sowohl unter Berücksichtigung des Masses für die Phasenverschiebung in unterschiedlichen Pixeln als auch unter Berücksichtigung des Masses für den mindestens einen genannten Parameter in unterschiedlichen Pixeln.

Dabei werden vorzugsweise zum Zwecke der Verifikation des Sicherheitsmerkmals sowohl das Mass für die Phasenverschiebung in unterschiedlichen Pixeln als auch das Mass für den genannten Parameter in unterschiedlichen Pixeln visualisiert, bevorzugt in Echtzeit.

Die vorliegende Offenbarung gibt ferner eine nicht erfindungsgemäße Detektionseinheit für die Verifikation eines Sicherheitsmerkmals, insbesondere eines Sicherheitsmerkmals der vorstehend genannten Art, an, welche umfasst:

eine Lichtquelle zur Erzeugung von Anregungslicht, wobei die Lichtquelle dazu ausgebildet ist, die Intensität des Anregungslichts mit einer Modulationsfrequenz zu modulieren;

einen Lock-in-Imager, der eine Mehrzahl von Pixeln umfasst, um Lumineszenzlicht, das vom Sicherheitsmerkmal emittiert wird, synchron mit der Modulationsfrequenz zu detektieren und ein Mass für eine Phasenverschiebung zwischen dem Anregungslicht und dem Lumineszenzlicht in unterschiedlichen Pixeln zu ermitteln; und

eine Schnittstelle, die dazu konfiguriert ist, das Mass für die Phasenverschiebung in unterschiedlichen Pixeln an ein Darstellungs- und Auswertegerät zu übermitteln.

Auf diese Weise wird das Darstellungs- und Auswertegerät in die Lage versetzt, das Sicherheitsmerkmal unter Berücksichtigung des Masses für die Phasenverschiebung in unterschiedlichen Pixeln zu verifizieren.

Für die Ausgestaltung des Lock-in-Imagers wird auf die obenstehenden Ausführungen verwiesen.

Die Detektionseinheit weist vorzugsweise ein Gehäuse auf, in dem die Lichtquelle und der Lock-in-Imager angeordnet sind. Das Gehäuse weist dann ein Fenster auf, welches dazu ausgebildet ist, über dem Sicherheitselement angeordnet zu werden. Die Detektionseinheit weist dabei eine Abbildungsoptik auf, um das unter dem Fenster angeordnete Sicherheitselement auf den Lock-in-Imager abzubilden und zu fokussieren. Die Abbildungsoptik kann insbesondere eine Verkleinerungsoptik sein, die einen Gegenstand in der Fokusebene der Optik in verkleinertem Massstab auf den Lock-in-Imager abbildet. Anders als bei der Fluoreszenzlebensdauermikroskopie (FLIM) wird in diesem Fall also das abzubildende Objekt verkleinert, nicht vergrössert. Die Fokussierung erfolgt vorzugsweise auf einen Bereich, der unmittelbar unter dem Fenster im Gehäuse liegt, insbesondere weniger als 30 cm, bevorzugt weniger als 10 cm, besonders bevorzugt weniger als 1 cm von der Ebene des Fensters im Gehäuse entfernt.

Die Detektionseinheit ist vorzugsweise portabel ausgebildet, um eine mobile Verifikation von Sicherheitsmerkmalen zu ermöglichen.

Der Lock-in-Imager kann dazu ausgebildet sein, neben dem Mass für die Phasenverschiebung in unterschiedlichen Pixeln auch ein Mass für mindestens einen der folgenden Parameter zu bestimmen: Anregungsfrequenz, Emissionsfrequenz und Lumineszenzintensität. Die Schnittstelle ist dann dazu konfiguriert, neben dem Mass für die Phasenverschiebung in unterschiedlichen Pixeln auch das Mass für den genannten Parameter in unterschiedlichen Pixeln an das Darstellungs- und Auswertegerät zu übermitteln.

Die Offenbarung stellt ferner eine nicht erfindungsgemäße Verifikationsvorrichtung mit einer Detektionseinheit der vorstehend genannten Art und mit einem Darstellungs- und Auswertegerät zu Verfügung. Dabei ist das Darstellungs- und Auswertegerät mit der Detektionseinheit zu einem einzigen Gerät integriert oder separat von der Detektionseinheit ausgebildet. Beispiele werden im Folgenden noch näher diskutiert. Die Detektionseinheit ist derart konfiguriert, dass sie das durch den Lock-in-Imager ermittelte Mass für die Phasenverschiebung in unterschiedlichen Pixeln an die Darstellungs- und Auswertegerät übermittelt. Das Darstellungs- und Auswertegerät kann dann derart konfiguriert sein, dass es aus dem Mass für die Phasenverschiebung in unterschiedlichen Pixeln eine graphische Darstellung generiert. Alternativ oder zusätzlich kann das Darstellungs- und Auswertegerät derart konfiguriert sein, dass es anhand des Masses für die Phasenverschiebung eine automatisierte Verifikation ausführt und das Verifikationsergebnis ausgibt und/oder an einen Server weiterleitet.

Das Darstellungs- und Auswertegerät kann insbesondere ein Smartphone oder ein Tablet-Computer sein, der eine geeignete App ausführt.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1      eine Prinzipskizze zur Visualisierung eines Sicherheitsmerkmals mit drei Flächenelementen unterschiedlicher Fluoreszenzlebensdauer;

Fig. 2      eine Prinzipskizze zur Visualisierung eines Sicherheitsmerkmals mit vier Flächenelementen aus fluoreszierenden Merkmalsstoffen mit unterschiedlicher Frequenz des Fluoreszenzlichtes und unterschiedlicher Fluoreszenzlebensdauer;

Fig. 3      eine Darstellung eines Schriftzuges, der teilweise aus fluoreszierenden Merkmalsstoffen gebildet ist, wobei diese sich durch unterschiedliche Konzentrationen in bestimmten Bereichen des Schriftzuges und verschiedene Fluoreszenzlebensdauer auszeichnen;

Fig. 4      eine schematische Prinzipskizze zum Aufbau einer Vorrichtung mit Detektionseinheit und Darstellungs- und Auswertegerät;

Fig. 5      eine vereinfachte perspektivische Darstellung einer Vorrichtung mit Detektionseinheit und Darstellungs- und Auswertegerät gemäss eines ersten nicht erfindungsgemäßen Beispiels;

Fig. 6      eine vereinfachte perspektivische Darstellung einer Vorrichtung mit Detektionseinheit und Darstellungs- und Auswertegerät gemäss eines zweiten nicht erfindungsgemäßen Beispiels, wobei die Auswerte- und Darstellungseinheit im Gehäuse der Detektionseinheit integriert ist;

Fig. 7 eine vereinfachte perspektivische Darstellung einer Vorrichtung mit Detektionseinheit und Darstellungs- und Auswertegerät gemäss eines dritten nicht erfindungsgemäßen Beispiels wobei das Darstellungs- und Auswertegerät als Smartphone ausgebildet ist und die Detektionseinheit als Aufsatz für das Smartphone ausgebildet ist;

Fig. 8 ein Diagramm, das die Verteilung eines fluoreszierenden Merkmalsstoffes auf der Basis der detektierten Fluoreszenzzerfallszeiten für zwei unterschiedliche Sicherheitselemente visualisiert;

Fig. 9 ein Diagramm, das die ausgelesenen Rohdaten eines Bildsensors für zwei unterschiedliche Phasenlagen visualisiert, aufgenommen von einem Sicherheitsmerkmal mit drei Flächenelementen unterschiedlicher Fluoreszenzlebensdauer; Teil a: Bild bei relativer Phase 0°; Teil b: Bild bei relativer Phase 90°; und

Fig. 10 ein Diagramm, das die daraus abgeleiteten Daten zur Phasendifferenz und zur Fluoreszenzlebensdauer visualisiert; Teil a: Phasendifferenz; Teil b: Fluoreszenzlebensdauer in Nanosekunden.

## BESCHREIBUNG BEVORZUGTER AUSFÜHRUNGSFORMEN

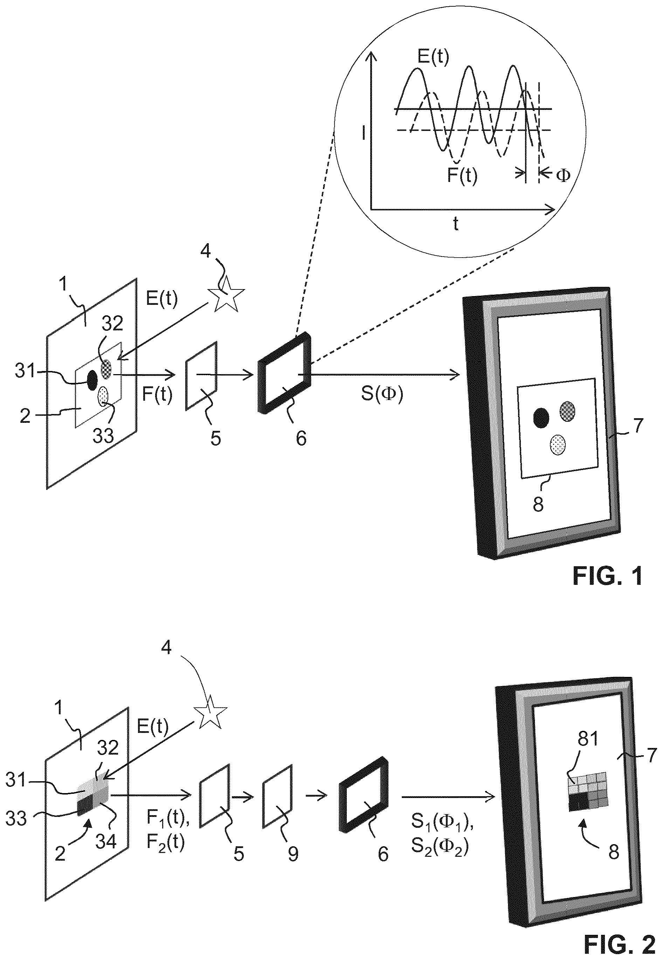

Die Figur 1 illustriert das Grundprinzip eines Verfahrens zur Verifikation eines Sicherheitsmerkmals gemäss der vorliegenden Erfindung.

Ein Gegenstand 1 ist mit einem Sicherheitsmerkmal 2 versehen, das im vorliegenden Beispiel drei Flächenelemente 31, 32, 33 aus fluoreszierenden Merkmalsstoffen mit unterschiedlichen Fluoreszenzlebensdauern umfasst. Das Sicherheitsmerkmal 2 wird durch eine Lichtquelle 4 mit Anregungslicht E(t) beleuchtet. Die Intensität I des Anregungslichts E(t) ist mit einer Modulationsfrequenz von z.B. 20 MHz moduliert. Das Anregungslicht E(t) wird optional mit einem nicht dargestellten Anregungsfilter spektral selektiert.

Durch das Anregungslicht werden die fluoreszierenden Merkmalsstoffe angeregt und emittieren Fluoreszenzlicht F(t), dessen Intensität I mit der gleichen Modulationsfrequenz moduliert, aber phasenverschoben ist. Dabei hängt die Phasenverschiebung Φ von der Fluoreszenzlebensdauer des jeweiligen Merkmalsstoffes ab. So gilt z.B. für eine einfache sinusoidale Modulation $\tan \Phi = \omega\tau$, wobei $\omega$ die Kreisfrequenz der Modulation und $\tau$ die Fluoreszenzlebensdauer im Sinne der oben eingeführten Gleichung (1) bezeichnet. Das emittierte Licht F(t) wird durch einen Sperrfilter 5 geleitet, der für die Frequenz des Fluoreszenzlichts, z.B. 535 THz (560 nm), transparent ist. Der Sperrfilter kann im Fall eines Down-Converting bzw. einer Stokes-Emission ein Langpassfilter sein, während der Sperrfilter im Fall eines Up-Converting bzw. einer Anti-Stokes-Emission ein Kurzpassfilter sein kann. Der Sperrfilter kann aber auch ein Bandpassfilter oder Schmalbandfilter sein.

Anschliessend gelangt das so gefilterte Licht auf einen Lock-in-Imager 6. Der Lock-in-Imager 6 ermittelt für ein Array von Pixeln, z.B. 256x256 Pixel, jeweils ein Mass für die Phasenverschiebung Φ zwischen Anregungslicht und Fluoreszenzlicht für jedes Pixel und erzeugt entsprechende Signale S(Φ).

Der Lock-in-Imager kann dabei in grundsätzlich ähnlicher Weise aufgebaut sein, wie dies in der Druckschrift US 2007/0018116 A1 angegeben ist. Für Details der Funktionsweise eines derartigen Lock-in-Imagers wird auf das genannte Dokument verwiesen. Anders als in dem genannten Dokument dient der Lock-in-Imager im vorliegenden Kontext nicht zur Fluoreszenzlebensdauermikroskopie von biologischen Proben, sondern zur Erfassung eines Sicherheitsmerkmals. Entsprechend unterscheidet sich die vorliegende Apparatur von der Apparatur des genannten Dokuments insbesondere durch eine andere optische Strahlführung und eine andere Ausgabeschnittstelle, wie dies nachfolgend noch näher ausgeführt wird. Der Lock-in-Imager kann je nach Ausführung auch eine andere Auflösung als oben genannt ermöglichen, z.B. im Format 16:10 zwischen CGA (320x200 Pixel) bis WUXGA (1920x1200 Pixel), wobei auch andere Formate oder andere bzw. tiefere oder höhere Auflösungen möglich sind, z. B. HD720 mit 1280x720 Bildpunkten im Format 16:9. Die Bildwiederholraten liegen je nach Ausführung zwischen 24 und 240 fps (frames per second), bevorzugt zwischen 60 und 150 fps.

Die Signale S(Φ) werden von einer nachgeschalteten Elektronik aufbereitet und an einer Schnittstelle zur Verfügung gestellt, so dass sie von einer Darstellungs- und Auswerteeinheit 7, z.B. einem Smartphone, visuell als Bild 8 dargestellt werden können. Die Verteilung der Fluoreszenzlebensdauern der Merkmalsstoffe innerhalb des Erfassungsbereichs des Lock-in-Imagers 6 wird dabei im Rahmen der Auflösung des Imagers auf der Darstellungs- und Auswerteeinheit 7 als Pixelgrafik wiedergegeben.

Die einzelnen Flächenbereiche können sich nicht nur durch ihre Lumineszenzlebensdauer, sondern auch durch ihre Emissionsfrequenz unterscheiden. Dies ist beispielhaft in der Fig. 2 illustriert. In der Ausführungsform der Fig. 2 umfasst das Sicherheitsmerkmal 2 vier Flächenelemente 31-34, wobei jedes Flächenelement einerseits durch seine Fluoreszenzlebensdauer und andererseits durch seine Fluoreszenzwellenlänge charakterisiert ist. Es kann also jedem Flächenelement eine eindeutige Kombination von Fluoreszenzlebensdauer und Fluoreszenzwellenlänge zugeordnet werden. Beispielsweise kann die Fluoreszenzlebensdauer jedes Flächenelements einen von zwei unterschiedlichen Werten annehmen (so dass die Fluoreszenzlebensdauer also ein binäres Bit 1 oder 0 codiert), und jede Fluoreszenzwellenlänge kann unabhängig davon ebenfalls einen von zwei Werten annehmen (codiert also ein weiteres Bit 1 oder 0). Insgesamt ermöglicht das dargestellte Sicherheitsmerkmal aus vier Flächenelementen damit eine Codierung von $2^4 \times 2^4 = 256$ Bits. Die Zahl der so codierten Bits kann durch eine höhere Zahl von Flächenelementen und/oder eine höhere Zahl auszuwählender Werte für die Fluoreszenzlebensdauer und/oder Fluoreszenzwellenlänge ohne weiteres erhöht werden. Dadurch kann ohne weiteres eine Individualisierung bis auf Einzelstückebene erreicht werden.

Um nicht nur die Fluoreszenzlebensdauer ortsaufgelöst zu ermitteln, sondern auch die Fluoreszenzwellenlänge aufzulösen, ist im Beispiel der Fig. 2 ein schmalbandiger Filter 9 (also ein hochselektiver Farbfilter) vorgesehen, der den Sperrfilter 5 ergänzt oder optional ersetzt. Für die Messung verschiedener Fluoreszenzwellenlängen wird der Filter 9 jeweils durch einen hochselektiven Farbfilter, der bei der gewünschten Wellenlänge durchlässig ist, ersetzt. Die Filter 5 und/oder 9 können sich direkt auf dem Lock-in-Imager befinden. Alternativ ist es auch möglich, mehrere Pixel, z.B. 2x2 benachbarte Pixel, zu einer Gruppe zusammenzufassen und auf den Pixeln jeder Gruppe unterschiedliche Farbfilter vorzusehen, um eine Wellenlängenselektivität zu erreichen, in ähnlicher Weise, wie dies bei herkömmlichen fotoempfindlichen Chips für die Fotografie durch den bekannten Beyer-Filter realisiert wird. Alternativ ist es möglich, einen Monochromator einzusetzen, z.B. auf Basis eines optischen Prismas oder Gitters, um eine Wellenlängenselektivität zu erreichen. Dabei kann die Durchlasswellenlänge des Monochromators durch elektrische Steuersignale veränderlich sein, um sequenziell eine ortsaufgelöste Abbildung der Fluoreszenzlebensdauer bei unterschiedlichen Fluoreszenzwellenlängen durchzuführen.

Auf diese Weise kann in der Darstellungs- und Auswerteeinheit 7 ein Bild 8 erzeugt werden, das sowohl die Verteilung der Fluoreszenzlebensdauer (in der Figur 2 symbolisiert durch die Signale $S_1(\Phi), S_2(\Phi)$ als auch die Verteilung der Fluoreszenzwellenlänge (in der Figur 2 symbolisiert durch die Signale $F_1(t), F_2(t)$) visualisiert. Im vorliegenden Beispiel wird in diesem Bild 8 jedes Flächenelement durch vier Pixel 81 wiedergegeben. Jedes Pixel ist im vorliegenden Beispiel durch eines von vier Wertepaaren $(F_1, \Phi_1)$, $(F_1, \Phi_2)$, $(F_2, \Phi_1)$ und $(F_2, \Phi_2)$ gekennzeichnet. Zur Visualisierung dieser Wertepaare kann z.B. jedem Wertepaar eine andere Farbe zugeordnet werden. Alternativ kann die Fluoreszenzwellenlänge durch unterschiedliche Farben visualisiert werden, während die Fluoreszenzlebensdauer durch unterschiedliche Sättigungswerte dieser Farben visualisiert wird. Es ist auch möglich, zwei getrennte Bilder für die Parameter Fluoreszenzwellenlänge und Fluoreszenzlebensdauer wiederzugeben. Selbstverständlich besteht eine grosse Zahl weiterer Möglichkeiten, eine Visualisierung vorzunehmen.

Falls darüber hinaus auch noch die Konzentration der Merkmalsstoffe zwischen den Flächenelementen variiert, lässt sich dies z.B. zusätzlich durch unterschiedliche Farbintensitäten darstellen. Dadurch ergibt sich insgesamt ein Bild mit charakteristischer Farbgebung und Form, was eine einfache visuelle Erkennung der Merkmalsstoffe auf dem Display des Wiedergabegerätes und damit eine einfache visuelle Verifizierung des Sicherheitsmerkmals bzw. des damit markierten Gegenstandes erlaubt.

Alternativ oder zusätzlich kann die Verifizierung auch automatisiert von einer App auf dem Wiedergabegerät vorgenommen werden und als eine echt/unecht-Angabe dem Betrachter wiedergegeben werden. Das Verifizierungsergebnis kann optional an einen entfernten Server übermittelt werden, oder die Bilddaten können an einen Server übermittelt werden, um dort die Verifikation vorzunehmen und das Ergebnis wieder zurück an das Wiedergabegerät zu übermitteln.

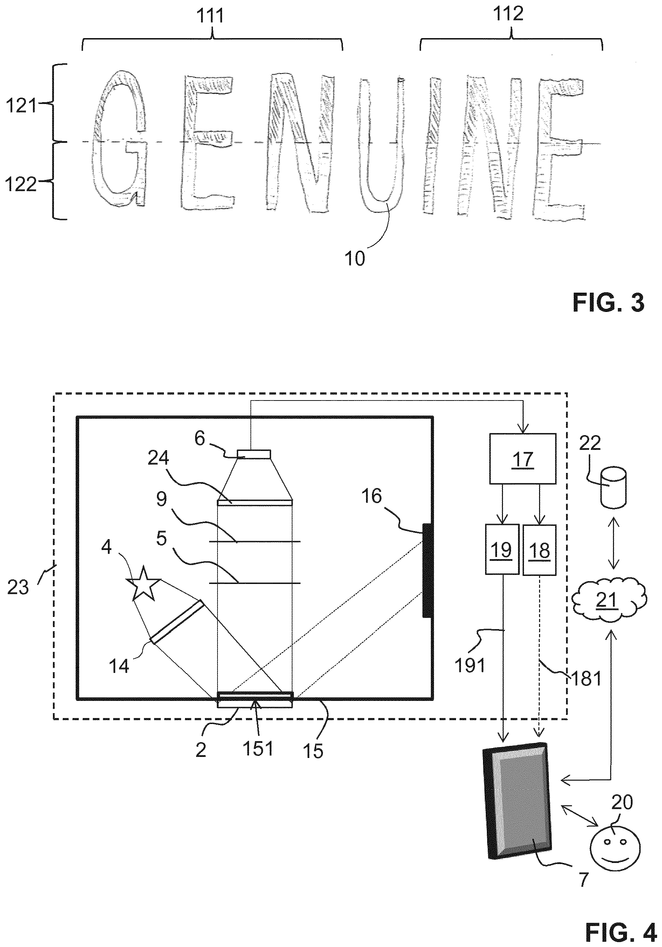

Figur 3 stellt ein Beispiel für ein Sicherheitsmerkmal in Form einer Grafik dar, die den Schriftzug «GENUINE» darstellt. Dabei sind die Bereiche 111, 112, 121, 122 des Schriftzugs aus unterschiedlichen fluoreszierenden Merkmalsstoffen in unterschiedlichen Konzentrationen gebildet, und der mittlere Buchstabe «U» ist aus einer nicht fluoreszierenden Druckfarbe gebildet. Die Fluoreszenzlebensdauer ist in den Bereichen 111, 112 jeweils konstant, aber unterscheidet sich zwischen diesen Bereichen. Gleichzeitig ist die Konzentration der Merkmalsstoffe (und damit die empfundene Farbintensität) in den Bereichen 121, 122 jeweils konstant, aber unterscheidet sich zwischen diesen Bereichen. Dadurch fluoreszieren die ersten drei Buchstaben des Wortes GENUINE mit einer anderen Fluoreszenzlebensdauer als die letzten drei, während die obere Hälfte der fluoreszierenden Buchstaben mit einer anderen Intensität, beispielsweise deutlich stärker als die untere Hälfte, fluoresziert. Der Lock-in-Imager erfasst die unterschiedlichen Parameter Fluoreszenzlebensdauer und Fluoreszenzintensität. Das Wiedergabegerät stellt die räumliche Verteilung dieser Parameter im Fluoreszenzlicht auf eine geeignete Weise visuell dar. Dank der Eigenfarbe der Merkmalsstoffe ist der gesamte Schriftzug auch mit blossem Auge lesbar. Dabei ist jedoch nicht erkennbar, dass die ersten drei Buchstaben eine andere Fluoreszenzlebensdauer als die letzten drei Buchstaben aufweisen. Dieser Unterschied wird erst durch die Aufnahme mit dem Lock-in-Imager erkennbar.

Selbstverständlich kann eine solche Grafik auch noch durch das zusätzliche Unterscheidungsmerkmal der Fluoreszenzfrequenz komplexer gestaltet werden, wobei die Darstellungs- und Auswerteeinheit 7 ggf. sowohl Fluoreszenzfrequenz als auch Lebensdauer visualisieren kann.

Die Figur 4 zeigt beispielhaft eine schematische Funktionsdarstellung einer Vorrichtung zur Verifikation eines Sicherheitsmerkmals, wobei die Vorrichtung eine zweidimensionale Erfassung einer gegenüber moduliertem Anregungslicht phasenverschobenen Fluoreszenz von Merkmalsstoffen des Sicherheitsmerkmals durchführt. Die Vorrichtung umfasst eine Detektionseinheit 23 und eine Darstellungs- und Auswerteeinheit 7. Ein Teil der Detektionseinheit 23 ist in einem Gehäuse 15 lichtdicht gekapselt.

Die Detektionseinheit 23 umfasst im Innern des Gehäuses 15 eine intensitätsmodulierte Lichtquelle 4, z.B. eine intensitätsmoduliert betriebene LED. Das von der Lichtquelle ausgesandte Licht gelangt durch eine Optik 14 zur Strahlführung auf ein Fenster 151 im Gehäuse 15. Dort beleuchtet das Licht ein Sicherheitsmerkmal 3, welches unter das Fenster 151 gelegt wurde. Licht, das direkt vom Sicherheitsmerkmal reflektiert wird, gelangt auf eine Lichtfalle 16, wo es absorbiert wird. Das vom Sicherheitsmerkmal 3 ausgesandte Fluoreszenzlicht gelangt durch die schon erwähnte Filter 5, 9 und eine Abbildungsoptik 24 auf den schon erwähnten Lock-in-Imager 6. Dabei kann der Wellenlängenfilter 9 z.B. als auswechselbarer Einschubfilter oder Filterrad mit mehreren Filterbereichen unterschiedlicher Transmissionswellenlänge ausgestaltet sein, um nacheinander gezielt Fluoreszenzlicht unterschiedlicher Wellenlängenbereiche zum Lock-in-Imager durchzulassen. Wie schon erwähnt, ist eine weitere Option, eine Filterschicht auf jedem Pixel des Lock-in-Imagers 6 vorzusehen, so dass jedem Pixel ein bestimmter Filter zugewiesen wird und so eine simultane Erfassung mehrerer Lumineszenzfrequenzen möglich wird, oder einen Monochromator vorzusehen.

Die Detektionseinheit kann selbstverständlich noch weitere Komponenten umfassen, z.B. optische Elemente zur Bereitstellung einer definierten Strahlgeometrie und zur Verbesserung der Strahlqualität für das Anregungs- und Fluoreszenzlicht. Beispielsweise kann das Licht der Lichtquelle 4 so aufgeweitet werden, dass das Fenster 151 der Detektoreinheit möglichst gleichmässig ausgeleuchtet wird. Andererseits sollte der Strahl des Fluoreszenzlichtes auf die Grösse des Lock-in-Image-Chips verengt werden, wobei geometrische Verzerrungen des Strahlquerschnittes möglichst vermieden werden sollten und gleichzeitig ein Fokussierung auf das Sicherheitselement ermöglicht wird. Hierzu dient die schon erwähnte Abbildungsoptik.

Die Signale aus den Ladungsabflüssen aus den diversen Speicherorten des Lock-in Imagers 6, dessen Arbeitszyklen einer Zeitsteuerung unterliegen, die im Wesentlichen von der Modulation des Anregungslichtes getriggert wird, werden in einer nachgeschalteten Steuereinheit 17 so aufbereitet, dass sie als Bilddaten einer Darstellungs- und Auswerteeinheit 7 zur Verfügung gestellt werden können. Die Bilddaten werden mit einer so hohen Wiederholrate ausgegeben, dass sie zu Videodaten zusammengefasst und/oder über ein Streaming der Darstellungs- und Auswerteeinheit 7 zur Verfügung gestellt werden können. Dementsprechend kann man bei der Erfassung der Lumineszenzdaten und ihrer Bildwiedergabe von einem Echtzeitverfahren sprechen.

Die Darstellungs- und Auswerteeinheit 7 kann beispielsweise ein Smartphone oder ein Tablet-Computer sein, wobei dieses Gerät eine geeignete App ausführt, um die Daten zu empfangen und darzustellen. Dabei können die Daten über eine Kabelschnittstelle 19, z.B. einen USB-Adapter, oder über einen Drahtlosadapter 18, der in geeigneten Funkstandards wie etwa Bluetooth oder WLAN sendet, entweder über Kabel 191 oder kabellos (Funkstrecke 181) an die Darstellungs- und Auswerteeinheit 7 übertragen werden. Die Darstellungs- und Auswerteeinheit 7 wird von einer Person 20 bedient, und die ausgegebenen Bilder werden von dieser begutachtet.

Die Bild- bzw. Videodaten können ausserdem über ein Netzwerk 21, z.B. das Internet oder eine andere Art der elektronischen Ferndatenübertragung, wie GSM oder LTE, an einen zentralen Server 22 weitergegeben werden. Es können auch Daten vom Server 22 auf die Darstellungs- und Auswerteeinheit 7 übertragen werden. Solche Daten können beispielsweise eine neue Software für die App betreffen oder auch ergänzende Daten zu dem mit dem Sicherheitsmerkmal geschützten Produkt. Die Datenübertragung zwischen Auswerteeinheit und Server kann online während eines Verifikationsprozesses erfolgen oder auch zu einem späteren Zeitpunkt stattfinden, wenn sich Auswerteinheit und Server synchronisieren. Es ist aber auch eine reine Offlineverifikation möglich, bei der sämtliche relevanten Daten in der Darstellungs- und Auswerteeinheit 7 gespeichert sind. Die Stromversorgung ist in beliebiger Weise über ein innen- oder aussenliegendes Netz-oder Batterieteil möglich, wobei zur Ladung eines Batterieteils ein Schnittstellenkabel wie etwa ein USB-Kabel in Frage kommen kann.

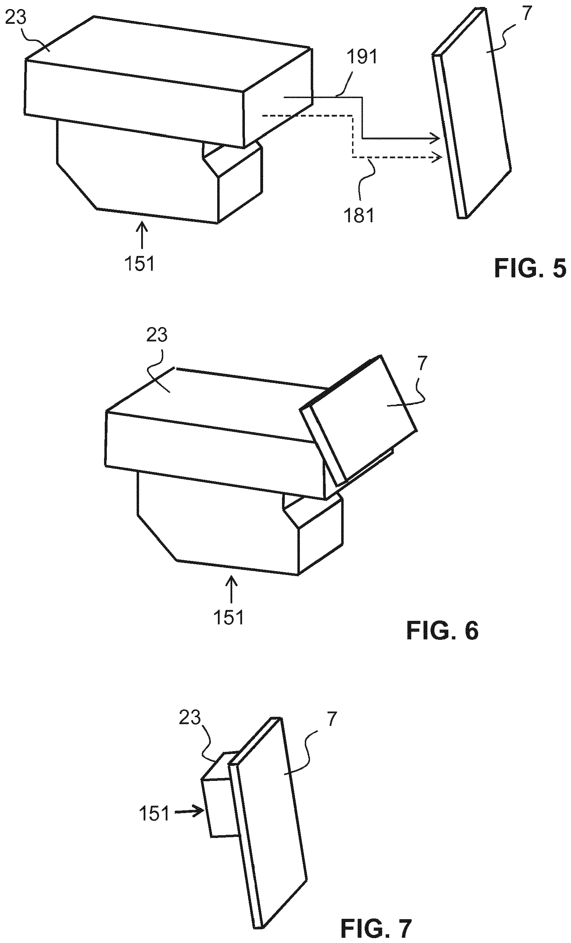

In den Figuren 5-7 sind beispielhaft verschiedene Gehäusekonzepte für die Verifikationsvorrichtung illustriert. Die Detektionseinheit 23 gemäss Fig. 5 hat eine Grösse, die es erlaubt, die Detektionseinheit 23 mit einer Hand leicht über den zu verifizierende Gegenstand zu bewegen, während das Fenster 151 zum Gegenstand mit dem Sicherheitsmerkmal weist. Die Wiedergabe- und Auswerteeinheit 7, hier in Gestalt eines Smartphone, ist über Kabel oder drahtlos mit der Detektionseinheit 23 zur Datenübertragung verbunden. Selbstverständlich ist es, wie in Fig. 6 skizziert, auch möglich, Detektionseinheit 23 und Wiedergabe- und Auswerteeinheit 7 in einem handlichen Gehäuse zusammenzufassen. Als Folge einer konsequenten Miniaturisierung der Detektionseinheit 23 ist es schliesslich möglich, diese als Modul an die Wiedergabe- und Auswerteeinheit7 anzuflanschen. So präsentiert sich die Detektionseinheit 23 präsentiert in der Fig. 7 wie ein Kameraaufsatz auf einem Smartphone. Es natürlich auch denkbar, die Detektionseinheit direkt auf eine μ-USB-Buchse (Android-Geräte) bzw. eine Lightning-Buchse (iPhone) aufzustecken. In weiterer Konsequenz ist die Integration der Detektionseinheit in ein Smartphone denkbar. Die erforderlichen Filter sind in dieser besonderen Ausführungsform wie SIM-Karten oder Speicherkarten über Schlitze, miniaturisierte Auszüge oder Fächer im Gehäuse des Smartphone austauschbar.

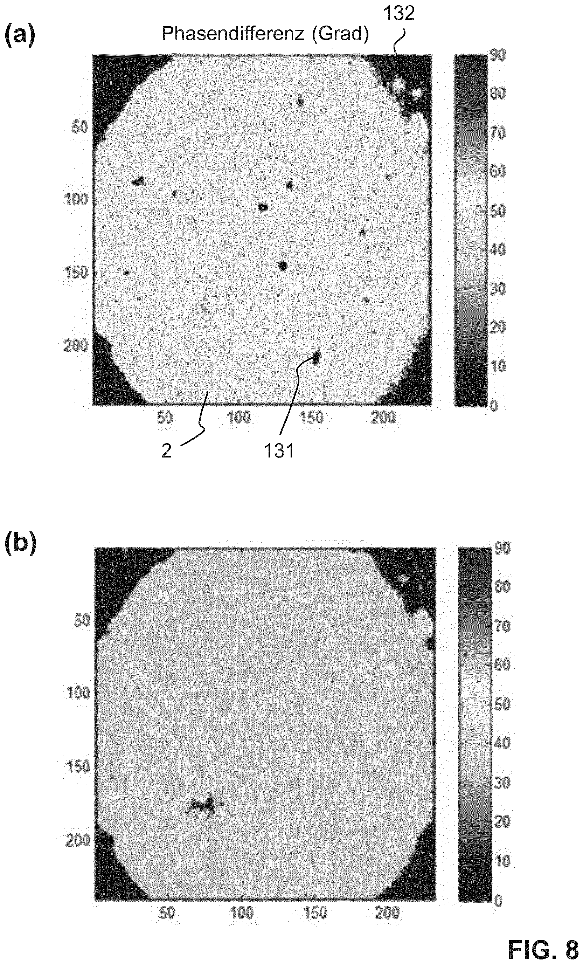

Die Fig. 8 präsentiert reale Aufnahmen der phasenverschobenen Fluoreszenz über ein Sicherheitsmerkmal 2 mit Hilfe eines Lock-in-Imagers. Der fluoreszierende Merkmalsstoff ist in diesen Beispielen nicht homogen über die Fläche verteilt, so dass die bleibenden Lücken 131 als Flecken zu erkennen sind. Das Fleckenmuster kann im Fall einer nicht vollständigen Bedeckung der Oberfläche des Sicherheitsmerkmals mit einem fluoreszierenden Merkmalsstoff mit stochastisch verteilten Lücken als Fingerabdruck der Einzelprodukterkennung dienen. Es ist natürlich auch eine Version denkbar, bei der ein grafisches Muster als Aussparung bzw. Aussparungen im ansonsten mit Fluoreszenzstoff bedeckten Oberflächenelement ergänzt mit stochastisch verteilten Lücken als Fingerabdruck dienen kann. Die Mustererkennung kann in diesem Anwendungsfall von einer Software auf dem Smartphone oder Tablet oder einem anderen Auswertegerät vorgenommen werden oder alternativ auf einem Server stattfinden, der die Daten online auswertet und das Ergebnis an das Auswertegerät zurückgibt, oder aber verdeckt auswertet, also nicht zurücksendet, oder aber offline nach dem nächsten Upload bzw. der nächsten Synchronisieren mit dem Gerät auswertet und dann das Verifizierungsergebnis wiederum fakultativ an das Gerät zurücksendet.

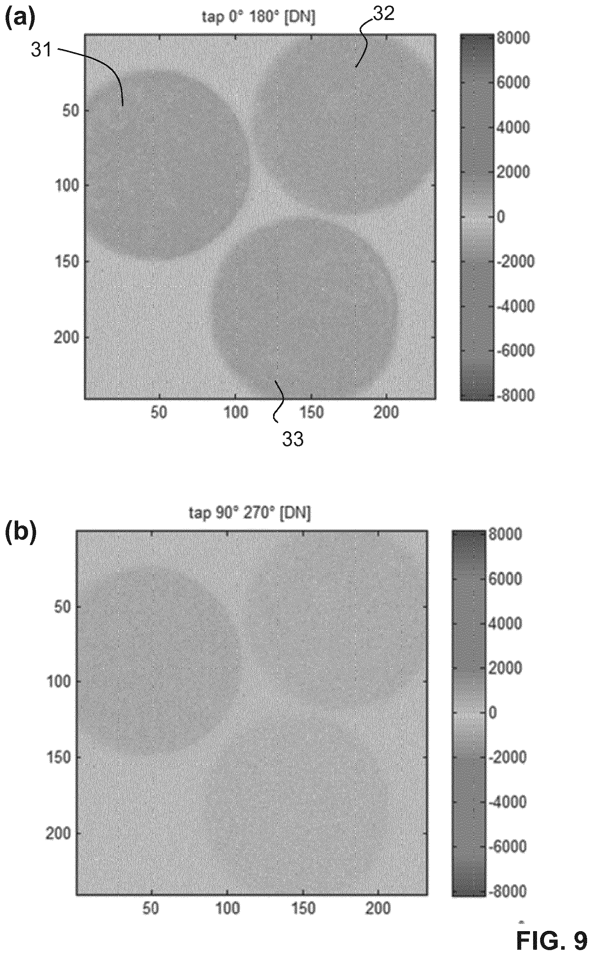

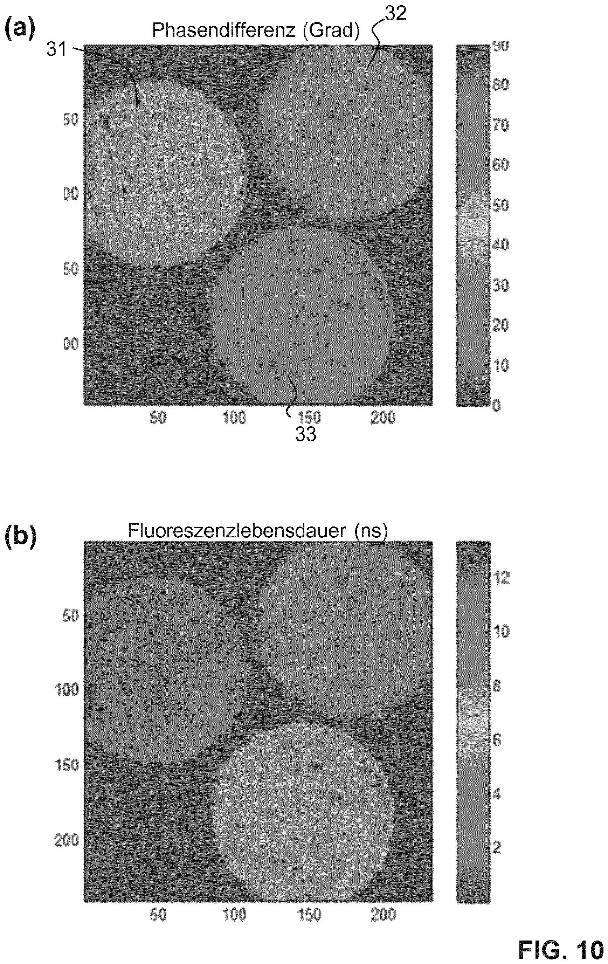

Die Figuren 9 und 10 illustrieren reale Bilder eines Sicherheitsmerkmals mit drei kreisförmigen Flächenelementen 31, 32, 33, die unterschiedliche Fluoreszenzlebensdauern aufweisen. Dabei zeigt die Figur 9 eine Darstellung von Rohdaten aus einem Lock-in-Imager, der pro Pixel zwei Speicherelemente aufweist, wobei die beiden Speicherelemente Signale speichern, die durch das Fluoreszenzlicht bei unterschiedlichen Phasenlagen relativ zu Modulationsfrequenz des Anregungslichts erzeugt wurden. Dabei zeigt Teil (a) die Signale derjenigen Speicherelemente, die die Signale bei einer ersten Phasenlage (hier als 0° bezeichnet) erfassen, und Teil (b) zeigt die Signale derjenigen Speicherelemente, die die Signale bei einer zweiten Phasenlage erfassen, die um 90° gegenüber der ersten Phasenlage verschoben ist. Dabei werden unterschiedliche Signalhöhen als unterschiedliche Helligkeitswerte dargestellt. Man erkennt aus einem Vergleich der Teile (a) und (b), dass sich die relativen Intensitäten der Rohdaten bei den beiden Phasenlagen 0° und 90° zwischen den drei Flächenelementen 31, 32, 33 unterscheiden.

Die Figur 10 zeigt die daraus abgeleiteten räumlichen Verteilungen der Phasendifferenz zwischen Fluoreszenzlicht und Anregungslicht (Teil (a)) sowie der Fluoreszenzlebensdauer (Teil (b)). Es ergeben sich die folgenden Fluoreszenzlebensdauern: 11.2 ns für Flächenelement 31; 10.5 ns für Flächenelement 32; und 7.2 ns für Flächenelement 33. Dieses Beispiel illustriert, dass eine praktische Umsetzung des geschilderten Prinzips ohne weiteres möglich ist.

Das in den vorstehenden nicht erfindungsgemäßen Beispielen erläuterte Verfahren wird also dazu eingesetzt, einen Gegenstand anhand der Lumineszenzeigenschaften eines oder mehrerer spezifischer Merkmalsstoffe hinsichtlich seiner Echtheit, Identität oder Herkunft zu untersuchen. Dabei wird insbesondere die Lebensdauer des angeregten Zustands von einem oder mehreren lumineszierenden bzw. fluoreszierenden Merkmalsstoffen auf einem Oberflächenelement eines zu verifizierenden Gegenstandes abgebildet. Die Lebensdauer bzw. Zerfallszeit des angeregten Zustandes wird zur Charakterisierung eines Merkmalsstoffes herangezogen, wobei die Messungen stets in der Frequenzdomäne vorgenommen werden. Das Ergebnis ist eine zweidimensionale Darstellung der über die Fläche verteilten Merkmalsstoffe als Bild oder Grafik, wobei aufgrund der hohen erreichbaren Bildwiederholraten eine Echtzeitdarstellung möglich ist. Auf diese Weise sind fluoreszierende Merkmalsstoffe unterschiedlicher Zerfallszeit voneinander unterscheidbar als auch von nicht fluoreszierenden Stoffen bzw. von einem nicht-fluoreszierenden Hintergrund.

Es wird also eine Echtzeitmessung der Fluoreszenzlebensdauer bzw. Lumineszenzlebensdauer eines Merkmalsstoffes vorgenommen. Gleichzeitig erlaubt die Vorrichtung, die die Messung vornimmt, simultan auf allen Flächenelementen der Probenoberfläche die Messung vorzunehmen und instantan zu visualisieren. Grundsätzlich stehen zur Erfassung der Lebensdauer eines angeregten Zustandes zwei Messverfahren zur Verfügung, einerseits die Messung der Abnahme der Fluoreszenz über die Zeit (Zeitdomäne oder TD) oder andererseits über die Phasenverschiebung des Emissionslichtes gegenüber dem Anregungslicht bei einer modulierten Lichtquelle zur Anregung der Fluoreszenz (Frequenzdomäne oder FD). Der Vorzug der FD besteht unter anderem darin, dass sie eine höhere Lichtintensität der Anregungsquelle erlaubt und damit eine kürzere Bildaufnahmezeit ermöglicht. Geeignete Lichtquellen mit einer genügend hohen spektralen Energiedichte, die bis zu einer Grössenordnung im Pikosekundenbereich gepulst und im Megahertzbereich moduliert werden können, sind in Form relativ preisgünstiger Leuchtdioden (LEDs) oder Laserdioden (LDs) erhältlich. Diese Bauteile eröffnen den Weg zur Konstruktion kompakter und kostengünstiger Geräte, die die nötigen Daten im Modus der FD gewinnen und dabei auf die Modulierbarkeit einer Lichtquelle angewiesen sind.

Die Messung der Phasenverschiebung zwischen dem modulierten Anregungslicht und der Emissionsantwort ermöglicht es, die Forderung nach günstigen Kosten sowie den für die Anwendung nötigen technischen Rahmenbedingungen zu erfüllen. Es wird ein ortsauflösender Detektor eingesetzt, wobei auch für dieses Bauelement eine kompakte Bauweise, niedrige Kosten und eine wenig aufwendige Betriebselektronik möglich sind. Für eine Weitwinkelmessung seitens des Detektors kann eine dem eigentlichen Detektor vorgeschaltete Mikrokanalplatte (multi-channel-plate, MCP, auch MCP-PMT) dienen, die zwar ein optimales Zeitverhalten aufweist, aber ansonsten Nachteile wie hoher Preis, geringe Robustheit, aufwendige technische Peripherie, hohes Rauschen und Neigung zu Artefakten aufweist. Als Alternative stellt ein kompakt gebauter Festkörperdetektor ähnlich einer herkömmlichen Digitalkamera mit vergleichbar einfacher Bedienung eine ideale Lösung dar. Ausgehend von so genannten Time-of-Flight-Kameras wurde ein Lock-in-Imager (Lock-in Chip, Lock-in Sensor, Lock-in CCD) als Sensor für die indirekte Messung der Fluoreszenzlebensdauer entwickelt. Der Begriff Lock-in-Imager respektive Lock-in-Chip oder Lock-in-Sensor steht für die Kopplung der Modulation des Anregungslichtes mit der Zeitsteuerung der Arbeitszyklen des die Phasenlage detektierenden fotoempfindlichen Chips. Das Messprinzip besteht aus den folgenden Elementen:

- Eine hinsichtlich der Lichtintensität modulierbare Lichtquelle für die Anregung der Fluoreszenz, z.B. in Gestalt einer LED oder LD
- Ein fotoempfindlicher Chip mit der Eigenschaft, dass er für die Phasenlage einer bevorzugt sinusoidal modulierten Lichtquelle sensitiv ist. Eine probate Chip-Architektur beruht auf dem folgenden Prinzip, dass zwei Potentialtöpfe (Orte für eine Ladungsspeicherung, storage sites) pro Pixel (Region mit einem fotoempfindlichen Bereich) existieren, wobei diese unter entgegengesetzter Gate-Spannung stehen und die Gate-Spannungen von der Modulationsfrequenz der anregenden Lichtquelle getaktet werden sowie gegenseitig um einen Phasenwinkel von 180° phasenverschoben sind. Diese Architektur erlaubt, es Photonen von elektromagnetischen Wellen in Abhängigkeit von ihrer Phasenlage als Ladungen in jeweils einem Potentialtopf zu sammeln, bevor die Ladungen über benachbarte Knotenpunkte abfliessen und ein Ausgangssignal generieren. Die Chip-Architektur muss jedoch nicht zwangsweise in dieser Form gestaltet sein.
- Der Sensor ist als 2D-Array ausgelegt und kann damit Daten erzeugen, die die Phasenverschiebungen zwischen Anregung und Emission zweidimensional darstellen kann.
- Der Detektor ist für einen weiten Frequenzbereich nutzbar, was die Zerfallszeiten unterschiedlicher Fluoreszenzstoffe in getrennten Arbeitszyklen, aber auch simultan, visualisieren kann.
- Für jede Fluoreszenzwellenlänge können bei einer Anwendung zur Detektion von Merkmalen mit zwei oder mehr Fluoreszenzwellenlängen geeignete Filter vor dem fotoempfindlichen Bereich des Chips eingesetzt werden, wobei sich die Filter ausserhalb des Chips zum Beispiel als Einschubfilter oder in einem Filterrad befinden können, oder im Verbund mit dem Chip eine eigene Einheit bilden können. Nach Art des Beyer-Filters auf den Bildwandler-Chips handelsüblicher Digitalkameras zur Erzeugung einer Farbinformation lässt sich direkt auf dem Lock-in-Imager-Chip auf jeden einzelnen Pixel oder auf einer Gruppe von Pixeln ein Farbfilter aufbringen, um spezifische Fluoreszenzstrahlung herauszufiltern. Eine Abfolge von roten und grünen Pixelfiltern mit bekannter Pixeladresse erlaubt beispielsweise die simultane Erfassung von rotem oder grünem Fluoreszenzlicht. Im Fall eines Foveon-Chips als bildempfindlichen Sensor erübrigt sich der Einsatz von Farbfiltern, sofern die farbselektiven Sensorebenen für die Filterung des Fluoreszenzlichtes genutzt werden können.

- Der Sensor ist vorteilhafterweise mit einem Filter gegen Licht der anregenden Frequenz geschützt, sofern die Funktion eines solchen Sperrfilters nicht mit dem Filter für die Transmission des Fluoreszenzlichtes, beispielsweise einem geeigneten Schmalbandfilter, übernommen werden kann.

Mit anderen Worten werden eine Vorrichtung und ein Verfahren offenbart, die zur Verifikation eines lumineszierenden Sicherheitsmerkmals für die Personalisierung, Serialisierung oder Echtheitsüberprüfung eines Gegenstands oder Dokuments geeignet sind. Diese zeichnen sich dadurch aus, dass die Lumineszenzlebensdauer von mindestens einem lumineszierenden Merkmalsstoff, der in Flächenelementen des Sicherheitsmerkmals enthalten ist, gemessen wird, wobei, erstens, das Anregungslicht geeigneter Frequenz von einer intensitätsmodulierten Lichtquelle abgestrahlt wird und bei dem mindestens einen Merkmalsstoff eine modulierte Lumineszenz hervorruft, die eine Phasenverschiebung zum anregenden Licht aufweist, zweitens, die Phasenverschiebung der Lumineszenz des mindestens ersten Merkmalsstoffs von einem fotoempfindlichen Sensor, der mindestens einen Teil des mindestens ersten Flächenelementes erfasst, detektiert wird, indem die Zeitsteuerung der Arbeitszyklen des fotoempfindlichen Sensors von der Modulation des Anregungslichts abhängt, wobei die Elemente unter erstens und zweitens zusammen eine Detektionseinheit bilden, und, drittens, die vom Sensor erzeugten Messwerte von einer Auswerteeinheit in eine Form überführt werden, die der Verifikation des Sicherheitsmerkmals dienlich ist.

Der Aufbau des Detektors ähnelt einem bildempfindlichen Sensor und kann eine spezielle Ausführungsform eines CCD-Chips darstellen, wobei die Bildaufnahmetechnologie auch mit anderen Chips als CCD denkbar ist (CMOS-, Foveon-Architektur, Quantenpunkttechnik, etc.). Grundsätzliches zum Prinzip findet sich zum Beispiel in einem Übersichtsartikel von A. Esposito et al. (siehe Opt Express 2005 Nov 28; 13(24): 9812-21). Eine nach diesem Prinzip gebaute Vorrichtung für eine FLIM-Anwendung wurde als US 2007/0018116 A1 veröffentlicht.

Neben den Identifikationsparametern Anregungs-/Emissionsfrequenz von einem oder mehreren fluoreszierenden Merkmalsstoffen und ihrer räumlichen Verteilung auf der Probenoberfläche steht für das Fine Tuning der Fluoreszenzzerfallszeiten die Natur der chemischen Zubereitung als Variable zur Verfügung. Die Fluoreszenzzerfallszeit eines Merkmalsstoffes lässt sich durch die Wahl der chemischen Umgebung, z.B durch den pH-Wert in einer Druckfarbe, beeinflussen. Ein dahinterstehendes Prinzip ist als Resonanzenergietransfer nach Förster (Förster Resonance Energy Transfer, FRET) bekannt. Eine Einflussnahme auf die durch den Sensor wahrnehmbare Phasenverschiebung lässt sich auch durch eine homogene Mischung von Pigmenten mit unterschiedlichen Fluoreszenzzerfallszeiten erreichen, was bei der Signalverarbeitung bis hin zur visuell interpretierbaren Bilddarstellung auf ein Mischsignal hinausläuft. Andererseits führt eine nicht-homogene Verteilung von mindestens zwei fluoreszierenden Merkmalsstoffen mit unterschiedlichen Fluoreszenzlebensdauern dazu, dass die Phasenverschiebungswerte bei der der Messung nachgeschalteten Bildverarbeitung unterscheidbar sind.

Die Voraussetzung für eine Authentifizierung eines Sicherheitsmerkmals auf Einzelstückebene ist so leicht zu erfüllen, insbesondere dann, wenn das Sicherheitsmerkmal auf die technischen Möglichkeiten des Nachweisgerätes angepasst ist bzw. wenn die Verifikation des Gegenstands oder Dokuments speziell für die Verifikation mit dem Nachweisgerät vorgesehen ist. Das Authentifizierungsverfahren wird im allgemein üblichen Fall mit Merkmalsstoffen durchgeführt, die eine Lumineszenz bzw. Fluoreszenz verbunden mit einer Stokes-Emission zeigen (Down-Converter). Es ist grundsätzlich auch möglich, eine Lebensdauermessung der Emissionsstrahlung von phosphoreszierenden Merkmalsstoffen, Merkmalsstoffen mit einer Anti-Stokes-Emission (Up-Converter) oder von solchen, deren Emission auf Quantenpunkten (Quantum Dots) beruht, vorzunehmen.

Es besteht prinzipiell keine Beschränkung hinsichtlich der chemischen Natur des fluoreszierenden Merkmalsstoffes. Der Merkmalsstoff kann damit organisch oder anorganisch sein, er kann metallischer oder keramischer Natur oder auch ein Biomolekül sein. Ein wesentlicher Vorteil des Verfahrens ist die mögliche Portabilität der gesamten Anordnung von Messvorrichtung und Life-Bilddarstellung. Während z.B. die US 2007/0018116 A1 ein typisches Laborverfahren offenbart, das zur Anwendung in einer Laborinfrastruktur konzipiert ist und fachlich geschultes Personal für die Auswertung und Interpretation der Ergebnisse voraussetzt, ist das hier vorgeschlagene Verfahren geeignet, an jedem Ort und zu jeder Zeit durchgeführt werden zu können. Es ist lediglich ein Minimum an Einweisung des Anwenders erforderlich, so dass der Anwender auch ein gewöhnlicher Konsument sein kann.

Um einen Nutzerkreis bis zum Laienniveau zu erschliessen, wird bevorzugt eine nahezu intuitive Bedienung des Nachweisgerätes implementiert. Ein geeignetes Fachniveau liegt zum Beispiel dann vor, wenn anhand einer selbsterklärenden App die Authentifizierung durchgeführt werden kann. Es wird daher ein portables und vergleichsweise kostengünstiges Gerät in einer Art Handheld-Ausführung (Handgerät) für die Datenakquisition sowie ein leicht verfügbares Gerät wie ein Smartphone oder Tablet für die Bilddarstellung mit einer für den Laien gut verständlichen App zur Bedienung vorgeschlagen.

Es bietet sich an, die Bedienung teilweise oder vollständig zu automatisieren. Die Anbindung der mobilen Bild- bzw. Videodarstellungseinheit, also z.B. des Smartphones, kann in bekannter Art und Weise drahtlos erfolgen, beispielsweise über Bluetooth oder ein geräteintegriertes WLAN, oder über eine Standardverkabelung, etwa ein USB-Kabel. Das für die Bedienung erforderliche Smartphone oder Tablet bietet nicht nur die Funktion der Visualisierung, sondern beinhaltet ausserdem Optionen, wie sie im Markenschutz teilweise verlangt werden. Solche Optionen sind z.B. eine Rückverfolgbarkeit des Nutzers über die Gerätkennung (UDID) oder die Erfassung von Geodaten und Zeitpunkt, um Ort und Zeit der Verifikation zu erfassen. Diese prinzipiell beliebigen Daten bzw. Angaben aus prinzipiell verschiedenen Quellen liefern, vollständig oder teilweise als verschlüsselter oder unverschlüsselter Bericht zusammengefasst, mehr und mehr bedeutsame Informationen für Kontrolle der Vertriebswege in der Markenpiraterie. Damit lassen sich Produkte am Verkaufspunkt (POS) oder Produktlager authentisieren oder ermöglichen z. B. das Alter eines Produktes zum Zeitpunkt des Verkaufs zu bestimmen. Die Daten, die mit dem erfindungsgemässen Verfahren gesammelt werden, eröffnen ausserdem den Weg in eine Nutzung für Logistik und Marketing. Das verwendete Smartphone oder Tablet erlaubt ausserdem die Anbindung an einen zentralen Server, um das Verifikationsergebnis zentral zu speichern und auszuwerten. Des Weiteren ist über eine Serveranbindung ein eventuell nötiges Software-Update ohne Zutun des Bedienungspersonals möglich, was einerseits die Zuverlässigkeit von Messung und Auswertung erhöht und andererseits den Nutzer von lästigen Bedienungsaufgaben zur Systemwartung befreit. Es ist natürlich auch möglich, die diese Funktionen inklusive der Konnektivität (Internetanbindung) vom Smartphone in das Nachweisgerät selbst zu verlagern. Eine andere Bedienungsvariante der Anwendung besteht darin, einen Teil der Bedienung oder die gesamte Bedienung an ein mit dem Smartphone gekoppeltes Gerät wie zum Beispiel eine Armbanduhr zu verlagern, z. B. in eine mit einem iPhone gekoppelte iWatch. Prinzipiell kann die Bilddarstellung über ein Display und die Auswertung auch in der Detektoreinheit mit dem Lock-in-Imager selbst erfolgen, quasi als Kombination von Smartphone oder Tablet und der Detektionseinheit in einem Gehäuse. Hingegen ist es für die Anwendung der zweidimensionalen Messung bzw. Visualisierung der Zerfallszeit-bedingten Phasenverschiebung ein Vorteil, wenn die Detektionseinheit in ein Smartphone bzw. in ein Smartphone mit geeignetem Kameraaufsatz integriert würde.

BEZUGSZEICHENLISTE

| | |
|---|---|
| 1 | markierter Gegenstand |
| 2 | Sicherheitsmerkmal |
| 31, 32, 33, 34 | Flächenelemente mit fluoreszierendem Merkmalsstoff |
| 4 | Fluoreszenzanregende intensitätsmodulierte Lichtquelle |
| 5 | Sperrfilter |
| 6 | Lock-in Imager |
| 7 | Darstellungs- und Auswerteeinheit |
| 8 | Darstellung des Sicherheitsmerkmals |
| 81 | Pixel |
| 9 | Bandpass- oder Schmalbandfilter |
| 10 | Flächenelement mit Eigenfarbe jedoch ohne fluoreszierende Merkmalsstoffe |
| 111, 112 | Flächenelemente mit Merkmalsstoffen unterschiedlicher Fluoreszenzwellenlänge und Fluoreszenzlebensdauer |
| 121, 122 | Flächenelemente mit unterschiedlicher Konzentration der Merkmalsstoffe |
| 131 | Orte ohne fluoreszierenden Merkmalsstoff |
| 132 | Region ausserhalb des Erfassungsbereiches |
| 14 | Optik zur Anpassung von Strahlqualität und Strahlgeometrie |
| 15 | Optisch dichtes Gehäuse der Detektionseinheit |
| 151 | Fensteröffnung im Gehäuse der Detektionseinheit |
| 16 | Lichtfalle für das reflektierte Anregungslicht |
| 17 | Steuerelektronik |
| 18 | Drahtlosadapter für WLAN, Bluetooth oder andere Drahtlossysteme |
| 181 | drahtlose Datenübertragung |
| 19 | kabelgebundene Schnittstelle, z. B. USB-Adapter |
| 191 | Kabeldatenübertragung, z. B. USB-Kabel |
| 20 | Person für die Bedienung und Wahrnehmung der visualisierten Phasenverschiebungswerte und anderer Angaben für die Verifikation |
| 21 | Internet |
| 22 | Zentraler Server mit Datenbank |
| 23 | Detektionseinheit |
| 24 | Abbildungsoptik |
| I | Intensität der anregenden und lumineszierenden elektromagnetischen Wellen |
| t | Zeit als Kehrwert der Modulationsfrequenz |
| E(t) | Moduliertes Anregungslicht |
| F(t) | Fluoreszenzlicht ausgelöst durch das modulierte Anregungslicht |
| M | Merkmalsstoff |
| Φ | Phasenverschiebung |

**Patentansprüche**

1. Sicherheitsmerkmal (2), aufweisend eine Mehrzahl von lumineszierenden Flächenelementen (31, 32, 33, 34),

wobei für jedes der Flächenelemente (31, 32, 33, 34) eine Lumineszenzlebensdauer ($\tau$) bestimmbar ist,
wobei die Lumineszenzlebensdauer ($\tau$) zwischen den Flächenelementen (31, 32, 33, 34) variiert, und
wobei die Lumineszenzlebensdauer ($\tau$) in den Flächenelementen (31, 32, 33, 34) Daten codiert,
**dadurch gekennzeichnet, dass** die Lumineszenzlebensdauer ($\tau$) in jedem Flächenelement (31, 32, 33, 34) einen von zwei unterschiedlichen Werten annimmt, und wobei die Daten mittels der Lumineszenzlebensdauer ($\tau$) binär codiert sind, wobei der erste Wert der Lumineszenzlebensdauer einer logischen 1 und der zweite Wert einer logischen 0 entspricht.

2. Sicherheitsmerkmal nach Anspruch 1,

wobei mindestens zwei der Flächenelemente (31, 32, 33, 34) einen Farbauftrag mit einem Gemisch von mindestens zwei Lumineszenzfarbstoffen in einem Mischungsverhältnis aufweisen, das zwischen den Flächenelementen (31, 32, 33, 34) variiert, so dass die Flächenelemente unterschiedliche mittlere Lumineszenzlebensdauern aufweisen, und/oder
wobei mindestens zwei der Flächenelemente (31, 32, 33, 34) einen Farbauftrag mit einem identischen Lumineszenzfarbstoff aufweisen, wobei sich aber die chemische Umgebung des Lumineszenzfarbstoffs zwischen den Flächenelementen (31, 32, 33, 34) derart unterscheidet, dass die Flächenelemente unterschiedliche Lumineszenzlebensdauern aufweisen.

3. Sicherheitsmerkmal nach einem der vorhergehenden Ansprüche,

wobei für jedes Flächenelement (31, 32, 33, 34) zusätzlich mindestens einer der folgenden Parameter bestimmbar ist: Anregungsfrequenz, Emissionsfrequenz und Konzentration eines Lumineszenzfarbstoffs,
wobei zwischen den Flächenelementen (31, 32, 33, 34) der genannte Parameter variiert, und wobei die Variation des genannten Parameters nicht vollständig mit der Variation der Lumineszenzlebensdauer ($\tau$) korreliert, so dass der genannte Parameter in den Flächenelementen (31, 32, 33, 34) unabhängig von der Lumineszenzlebensdauer ($\tau$) Daten codiert.

## Claims

1. A security feature (2), having a plurality of luminescent surface elements (31, 32, 33, 34),

wherein a luminescence lifetime ($\tau$) is determinable for each of the surface elements (31, 32, 33, 34),
wherein the luminescence lifetime ($\tau$) varies between the surface elements (31, 32, 33, 34), and
wherein the luminescence lifetime ($\tau$) codes data in the surface elements (31, 32, 33, 34),
**characterized in that** the luminescence lifetime ($\tau$) in each surface element (31, 32, 33, 34) can assume one of two different values, and wherein the data are binary coded by means of the luminescence lifetime ($\tau$), and wherein the first value of the luminescence lifetime corresponds to a logical 1 and the second value corresponds to a logical 0.

2. The security feature as claimed in claim 1,

wherein at least two of the surface elements (31, 32, 33, 34) have a color application having a mixture of at least two luminescent dyes in a mixing ratio which varies between the surface elements (31, 32, 33, 34), so that the surface elements have different mean luminescence lifetimes, and/or
wherein at least two of the surface elements (31, 32, 33, 34) have a color application having an identical luminescent dye, wherein, however, the chemical environment of the luminescent dye differs between the surface elements (31, 32, 33, 34) in such a way that the surface elements have different luminescence lifetimes.

3. The security feature as claimed in any one of the preceding claims,

wherein additionally at least one of the following parameters is determinable for each surface element (31, 32, 33, 34): excitation frequency, emission frequency, and concentration of a luminescent dye,
wherein the said parameter varies between the surface elements (31, 32, 33, 34), and
wherein the variation of the said parameter is not completely correlated with the variation of the luminescence lifetime ($\tau$), so that the said parameter codes data in the surface elements (31, 32, 33, 34) independently of the luminescence lifetime ($\tau$).

## Revendications

1. Élément de sécurité (2) comprenant une pluralité d'éléments de surface luminescents (31, 32, 33, 34),

une durée de vie de luminescence ($\tau$) pouvant être déterminée pour chacun des d'éléments de surface luminescents (31, 32, 33, 34),
la durée de vie de luminescence ($\tau$) variant entre les éléments de surface (31, 32, 33, 34), et
la durée de vie de luminescence ($\tau$) dans les éléments de surface (31, 32, 33, 34) encodant des données,
**caractérisé en ce que** la durée de vie de luminescence ($\tau$) dans chaque élément de surface (31, 32, 33, 34) prend l'une de deux valeurs différentes, et les données étant codées en binaire au moyen de la durée de vie de luminescence ($\tau$), la première valeur de la durée de vie de luminescence correspondant à un 1 logique et la deuxième valeur à un 0 logique.

2. Élément de sécurité selon la revendication 1,

dans lequel au moins deux des éléments de surface (31, 32, 33, 34) présentent une application de couleur avec un mélange d'au moins deux colorants luminescents dans un rapport de mélange qui varie entre les éléments de surface (31, 32, 33, 34), de sorte que les éléments de surface présentent des durées de vie de luminescence moyennes différentes, et/ou
dans lequel au moins deux des éléments de surface (31, 32, 33, 34) présentent une application de couleur avec un colorant luminescent identique, mais dans lequel l'environnement chimique du colorant luminescent diffère entre les éléments de surface (31, 32, 33, 34) de telle sorte que les éléments de surface présentent des durées de vie de luminescence différentes.

3. Élément de sécurité selon l'une quelconque des revendications précédentes,
au moins l'un des paramètres suivants pouvant en outre être déterminé pour chaque élément de surface (31, 32, 33, 34) : fréquence d'excitation, fréquence d'émission et concentration d'un colorant luminescent,

ledit paramètre variant entre les éléments de surface (31, 32, 33, 34), et

la variation dudit paramètre n'étant pas totalement corrélée à la variation de la durée de vie de luminescence ($\tau$), de sorte que ledit paramètre code des données dans les éléments de surface (31, 32, 33, 34) indépendamment de la durée de vie de luminescence ($\tau$).

**FIG. 1**

**FIG. 2**

**FIG. 3**

**FIG. 4**

**FIG. 5**

**FIG. 6**

**FIG. 7**

(a) Phasendifferenz (Grad)

FIG. 8

**(a)**

tap 0° 180° [DN]

**(b)**

tap 90° 270° [DN]

**FIG. 9**

**(a)** Phasendifferenz (Grad)

**(b)** Fluoreszenzlebensdauer (ns)

FIG. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5608225 A
- WO 9509499 A1
- US 20150260653 A1
- US 20070018116 A1
- US 2007145293 A1
- US 20050178841 A1
- WO 2015159438 A1

**In der Beschreibung aufgeführte Nicht-Patentliteratur**

- **PERIASAMY A. ; CLEGG R. M.** FLIM Microscopy in Biology and Medicine. CRC Press, 2010
- **A. ESPOSITO et al.** *Opt Express,* 28. November 2005, vol. 13 (24), 9812-21